# EUROPÄISCHE PATENTSCHRIFT

(11) **EP 2 568 187 B1**
(45) Veröffentlichungstag und Bekanntmachung des Hinweises auf die Patenterteilung: **27.05.2015**
(21) Anmeldenummer: 11180521.4
(22) Anmeldetag: 08.09.2011
(51) Int. Cl.: F16C 33/76, F16J 15/16, F16J 15/32

(54) **Gehäuseanordnung**
Casing assembly
Agencement de boîtier

(43) Veröffentlichungstag der Anmeldung: 13.03.2013
(73) Patentinhaber: Siemens Aktiengesellschaft, 80333 München (DE)
(72) Erfinder: Schnurr, Wolfgang, 72147 Nehren (DE)

(56) Entgegenhaltungen:
- DE-A1- 10 259 400
- DE-C1- 19 841 099
- US-A- 3 685 838
- US-A- 4 699 526

## Beschreibung

Die vorliegende Erfindung betrifft eine Gehäuseanordnung nach dem Oberbegriff von Anspruch 1.

Gehäuseanordnungen der eingangs genannten Art sind im Stand der Technik bekannt und werden zur Aufnahme von Motoren und Getrieben eingesetzt. Allgemein umfassen solche Gehäuseanordnungen ein Gehäuse mit einer Gehäusedurchführung, durch die eine Antriebs- oder Abtriebswelle, welche einen Motor mit einem Getriebe verbindet, greift. Um einen Austritt eines Kühlschmiermittels aus dem Gehäuse zu verhindern, ist ein Wellendichtring vorgesehen, der einen Ringspalt zwischen der Gehäusedurchführung und der Welle abdichtet.

Aus der US 3,685,838 A ist eine Dichtungsanordnung bekannt, welche als Trockendichtung ausgebildet ist. Diese umfasst einen Gummiring, der in den Ringspalt zwischen Welle und Gehäusedurchführung eingepresst ist und sich zwischen der Welle und der den Ringspalt außenseitig begrenzenden Wandung des Gehäuses abstützt, und einem Metallring. Die Dichtungsringe besitzen jeweils eine Dichtungslippe, die mit der Welle unter Bildung einer Sekundärdichtung in Kontakt steht. Die Dichtungslippen dienen dazu, ein Eintreten von Schutz oder anderen Partikeln in das Gehäuse zu verhindern. Ferner bilden die Dichtungsringe an ihrer zum Gehäuseinneren, d.h. an ihrer ölseitigen Innenfläche, eine Dichtungsfläche bzw. Dichtungskante, an welcher der Metallring unter Bildung einer Primärdichtung, die ein Austreten von Öl aus dem Gehäuse verhindert, in Anlage kommt. Dabei wird an der zur Welle weisenden Unterseite des Metallrings ein Raum gebildet, der frei von Öl gehalten werden soll. Hierzu ist in dem Metallblech eine Öffnung vorgesehen, durch welche Öl, welches in ungewollter Weise durch den Dichtungsbereich zwischen der Metallscheibe und der Dichtungsfläche des Dichtungsring eintritt, aufgrund der im Betrieb herrschenden Zentrifugalkräfte wieder aus dem Raum geworfen wird. Solche Dichtungsanordnungen sind insofern problematisch, als die Dichtungen mit der Zeit spröde werden können.

Damit der Wellendichtring nicht spröde und in Folge dessen undicht wird, wird dieser im Betrieb bei bekannten Gehäuseanordnungen geschmiert aber vor allem gekühlt werden. Für die Schmierung des Wellendichtrings reicht bereits ein Tropfen eines Kühlschmiermittels aus, dagegen werden an die Kühlung hohe Forderungen gestellt. Wenn im Betrieb zu wenig Kühlschmiermittel an den Wellendichtring geführt wird, kann dieser beschädigt und undicht werden. Trifft allerdings eine zu große Menge an Kühlschmiermittel auf den Wellendichtring, wird das Kühlschmiermittel im Bereich des Wellendichtrings aus dem Gehäuse gedrückt.

Im Stand der Technik ist bekannt, eine Schleuderscheibe innerhalb des Gehäuses vor dem Wellendichtring vorzusehen, die verhindert, dass zu viel Kühlschmiermittel an die Wellendichtung gelangt. Konkret ist die Schleuderscheibe mit der Welle verbunden und lenkt das auf sie auftreffende Kühlschiermittel nach außen von der Welle weg.

Zum Teil wird als nachteilig empfunden, dass es durch den Einsatz der Schleuderscheibe über den Drehzahlbereich der Welle zu einer Unterversorgung an Kühlschmiermittel kommt.

Ausgehend von diesem Stand der Technik ist es eine Aufgabe der vorliegenden Erfindung, eine Gehäuseanordnung der eingangs genannten Art zu schaffen, bei der die Dichtung über den gesamten Drehzahlbereich der Welle mit einer vorgegebenen und konstanten Menge an Kühlschmiermittel versorgt wird.

Zur Lösung dieser Aufgabe schafft die vorliegende Erfindung eine Gehäuseanordnung nach dem kennzeichnenden Merkmal von Anspruch 1.

Der Erfindung liegt somit die Überlegung zugrunde, den zwischen der Schleuderscheibe und der Dichtung gebildeten Kühlschmiermittelraum als eine Art Kühlschmiermitteldepot zu verwenden, der über den gesamten Drehzahlbereich der Welle stets eine konstante Menge an Kühlschmiermittel aufweist.

Hierzu schlägt die Erfindung vor, eine Leiteinrichtung vorzusehen, die sich zumindest abschnittsweise über die ringförmige Öffnung des zwischen der Dichtung und der Schleuderscheibe gebildeten Kühlschmiermittelraums erstreckt. Im Betrieb trifft zumindest ein Teil des von der Schleuderscheibe nach außen weggelenkten Kühlschmiermittels auf die Leiteinrichtung und wird von dieser durch die ringförmige Öffnung in den Kühlschmiermittelraum geleitet. Der andere, nicht abgelenkte Teil des Kühlschmiermittels strömt an der ringförmigen Öffnung und der Leiteinrichtung vorbei nach außen. Durch Anpassung der Anordnung, Ausrichtung und Geometrie der Leiteinrichtung an die konkrete Ausgestaltung der Schleuderscheibe kann die von der Leiteinrichtung in den Kühlschmiermittelraum gelenkte Menge an Kühlschmiermittel gezielt eingestellt werden.

In bevorzugter Weise ist die Leiteinrichtung ringförmig ausgebildet. In diesem Fall trifft zumindest ein Teil des von der Schleuderscheibe nach außen weggelenkten Kühlschmiermittels über den gesamten Umfangsbereich der Welle auf die Leiteinrichtung und wird von dieser in den Kühlschmiermittelraum geleitet. Dabei kann durch Variierung der mit dem Kühlschmiermittel in Kontakt kommenden Fläche der Leiteinrichtung die von dieser in den Kühlschmiermittelraum geleiteten Menge an Kühlschmiermittel eingestellt werden.

Vorteilhafterweise ist die Leiteinrichtung in deren Umfangsrichtung mit einem gleichbleibenden radialen Abstand zu der Welle angeordnet. Damit wurden besonders gute Ergebnisse erzielt.

In Weiterbildung der vorliegenden Erfindung kann die Leiteinrichtung in deren Umfangsrichtung mehrere die Leiteinrichtung unterbrechende Öffnungsabschnitte aufweisen. Dadurch wird zumindest abschnittsweise die mit dem Kühlschmiermittel in Kontakt stehende Fläche der Leiteinrichtung verringert. Der durch die Öffnungsabschnitte fließende Teil des Kühlschmiermittels wird somit von der Leiteinrichtung von dem Kühlschmiermittelraum weggeleitet. Durch das weggeleitete Kühlschmiermittel entsteht in dem Kühlschmiermittelraum ein Unterdruck, wodurch sich eine Saugwirkung einstellt. Diese bewirkt, dass zumindest ein Teil des sich in dem Kühlschmiermittelraum befindlichen Kühlschmiermittels nach außen gesaugt wird und mit dem vorbeiströmenden Kühlschmiermittel abfließt. In den mit dem Kühlschmiermittel in Kontakt stehenden Bereichen der Leiteinrichtung wird das auf die Leiteinrichtung treffende Kühlschmiermittel in den Kühlschmiermittelraum geleitet. Auf diese Weise stellt sich in dem Kühlschmiermittelraum ein kontinuierlicher Kreislauf von ein- und ausströmenden Kühlschmiermittel mit einer in dem Kühlschmiermittelraum gleichbleibenden Menge an Kühlschmiermittel ein. Durch den ständigen Austausch des Kühlschmiermittels in dem Kühlschmiermittelraum wird die Dichtung besonders gut gekühlt.

Gemäß einer Ausgestaltung der vorliegenden Erfindung sind vier Öffnungsabschnitte vorgesehen und insbesondere in Umfangsrichtung der Leiteinrichtung mit einem Versatz von 90° angeordnet. Damit wurden besonders gute Ergebnisse erzielt.

Zweckmäßigerweise erstrecken sich die Öffnungsabschnitte jeweils über einen Umfangsbereich von etwa 10° bis 80°, insbesondere 20° bis 45°. Durch Variierung der Größe der Öffnungsabschnitte kann auf einfache Weise zum einen die Menge des in den Kühlschmiermittelraum gelenkten Kühlschmiermittels und zum anderen die Menge des an der Leiteinrichtung vorbeiströmenden Kühlschmiermittels sowie der sich dadurch im Kühlschmiermittelraum ergebene Unterdruck eingestellt werden. Auf diese Weise kann die in den Kühlschmiermittelraum ein- und ausströmende Menge an Kühlschmiermittel gezielt an die Forderungen an die Kühlung der Dichtung angepasst werden.

Gemäß der vorliegenden Erfindung ist vorgesehen, dass die Leiteinrichtung von einer Gehäusewand abragt und insbesondere an dieser befestigt ist. Bevorzugt ist die Leiteinrichtung als Vorsprung an dem Gehäuse ausgebildet und insbesondere einteilig mit dem Gehäuse ausgebildet. Dadurch kann die Leiteinrichtung zusammen mit dem Gehäuse in einem Arbeitsschritt hergestellt werden. Zudem wird durch die Ausbildung der Leiteinrichtung an dem Gehäuse ihre Stabilität erhöht.

Um den Austritt des Kühlschmiermittels aus dem Gehäuse sicher zu verhindern, kann die Dichtung als Wellendichtring ausgebildet sein. Der Wellendichtring ist zum Abdichten des Gehäuses gegenüber der Welle besonders gut geeignet.

Bevorzugt ist in dem Gehäuse ein Motor, eine Adaptereinheit eines Getriebes oder eine Adaptereinheit eines Getriebemotors vorgesehen. Für diese Baugruppen ist die erfindungsgemäße Gehäuseanordnung besonders gut geeignet.

Hinsichtlich weiterer vorteilhafter Ausgestaltungen der Erfindung wird auf die Unteransprüche sowie auf die nachfolgende Beschreibung von einem Ausführungsbeispiel unter Bezugnahme auf die beiliegende Zeichnung verwiesen. In der Zeichnung zeigt:
- Figur 1: einen Ausschnitt einer Gehäuseanordnung gemäß einer Ausführungsform der vorliegenden Erfindung in Seitenquerschnittsansicht;
- Figur 2: die Gehäuseanordnung aus Figur 1 in Draufsicht; und
- Figur 3: eine vergrößerte Teilansicht der Gehäuseanordnung aus Figur 1 in Seitenquerschnittsansicht.

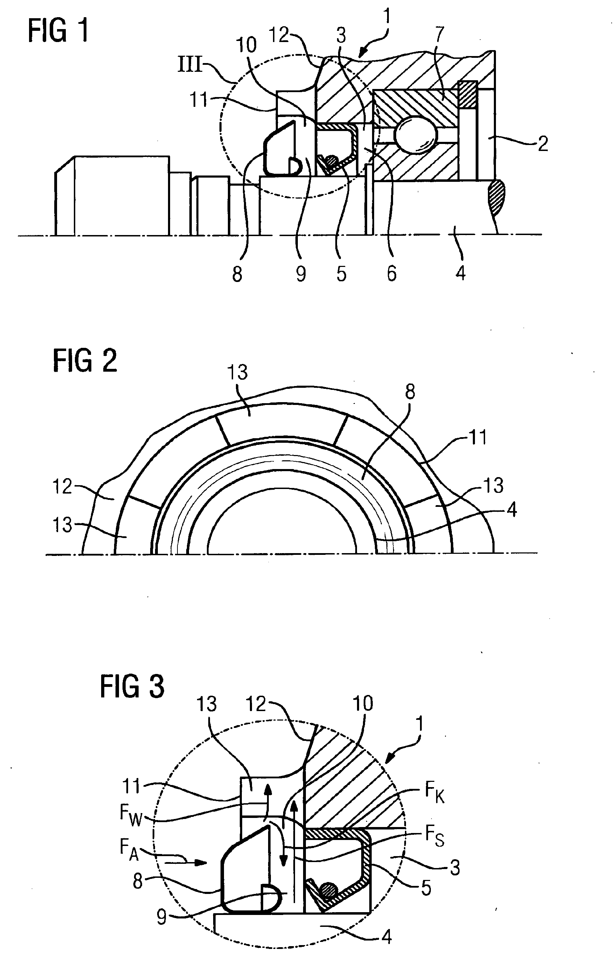

In der Figur 1 ist ein Ausschnitt einer Gehäuseanordnung gemäß einer Ausführungsform der vorliegenden Erfindung dargestellt. Die Gehäuseanordnung umfasst ein Gehäuse 1 mit einer Öffnung 2, an die sich eine Gehäusedurchführung 4 anschließt. Eine Antriebswelle 4 greift durch die Gehäusedurchführung 3 und verbindet ein in dem Gehäuse 1 aufgenommenes, nicht dargestelltes Getriebe mit einem außerhalb des Gehäuses angeordneten, nicht dargestellten Motor. Weiterhin gehört zu der Gehäuseanordnung ein Wellendichtring 5, der einen Ringspalt 6 zwischen der Gehäusedurchführung 3 und der Antriebswelle 4 abdichtet, um einen Austritt eines Kühlschmiermittels aus dem Gehäuse 1 zu verhindern. Über ein axial hinter der Dichtung 5 angeordnetes Lager 7 stützt sich die Antriebswelle 4 an dem Gehäuse 1 ab. Axial vor der Dichtung 5 ist eine Schleuderscheibe 8 angeordnet, die drehfest mit der Welle 4 verbunden ist, um auf sie auftreffendes Kühlschmiermittel nach außen von der Welle 4 wegzulenken. Axial zwischen der Dichtung 5 und der Schleuderscheibe 8 ist ein Kühlschmiermittelraum 9 gebildet, der an seiner radial äußeren Seite eine ringförmige Öffnung 10 aufweist.

Erfindungsgemäß ist eine Leiteinrichtung 11 vorgesehen, die von einer Gehäusewand 12 als Vorsprung abragt und einteilig mit dem Gehäuse 1 ausgebildet ist. In der Figur 2 ist gut erkennbar, dass die Leiteinrichtung 11 ringförmig und konzentrisch zu der Welle 4 ausgebildet ist und sich abschnittsweise über die ringförmige Öffnung 10 des Kühlschmiermittelraums 9 erstreckt. In deren Umfangsrichtung weist die Leiteinrichtung 11 vier Öffnungsabschnitte 13 auf, die sich jeweils über einen Umfangsbereich von etwa 30° erstrecken und in Umfangsrichtung mit einem Versatz von 90° zueinander angeordnet sind.

Gemäß der Figur 3 strömt im Betrieb das Kühlschmiermittel durch die Rotationsbewegung der Antriebswelle 4 axial in Richtung des Pfeils F_{A} hin zu der Schleuderscheibe 8. Das auf die Schleuderscheibe 8 treffende Kühlschmiermittel wird von dieser nach außen von der Antriebswelle 4 in Richtung der Leiteinrichtung 11 weggelenkt. Der mit der Schleuderscheibe 8 zugewandten Unterseite der Leiteinrichtung 11 in Kontakt kommende Teil des Kühlschmiermittels wird von der Leiteinrichtung 11 durch die ringförmige Öffnung 10 in Richtung des Pfeils F_{K} in den Kühlschmiermittelraum 9 geleitet. Dieser Teil des Kühlschmiermittels dient im Kühlschmiermittelraum 9 zur Schmierung aber vor allem zur Kühlung des Wellendichtrings 5. Der andere, nicht in den Kühlschmiermittelraum 9 geleitete Teil des Kühlschmiermittels strömt in Richtung des Pfeils F_{W} durch die Öffnungsabschnitte 13 der Leiteinrichtung 11 und wird von dem Kühlschmiermittelraum 9 weggeleitet. Durch das wegströmende Kühlschmiermittel entsteht in dem Kühlschmiermittelraum 9 ein Unterdruck, wodurch sich eine Saugwirkung einstellt. Diese bewirkt, dass der sich in dem Kühlschmiermittelraum 9 befindliche Teil des Kühlschmiermittels in Richtung des Pfeils F_{S} nach außen gesaugt wird und mit dem vorbeiströmenden Teil des Kühlschmiermittels wegfließt. Auf diese Weise stellt sich in dem Kühlschmiermittelraum 9 ein kontinuierlicher Kreislauf von ein- und ausströmenden Kühlschmiermittel mit einer insgesamt in dem Kühlschmiermittelraum 9 gleichbleibenden Menge an Kühlschmiermittel ein.

Obwohl die Erfindung im Detail durch das bevorzugte Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

## Patentansprüche

1. Gehäuseanordnung mit einem Gehäuse (1), das eine Gehäusedurchführung (3) aufweist, einer Welle (4), welche die Gehäusedurchführung (3) durchgreift, einer Dichtung (5), die einen Ringspalt (6) zwischen der Gehäusedurchführung (3) und der Welle (4) abdichtet, um einen Austritt eines Kühlschmiermittels aus dem Gehäuse (1) zu verhindern, und einer Schleuderscheibe (8), die innerhalb des Gehäuses (1) angeordnet und drehfest mit der Welle (4) verbunden ist, um auf sie auftreffendes Kühlschmiermittel nach außen von der Welle (4) wegzulenken, wobei ein Kühlschmiermittelraum (9) zwischen der Dichtung (5) und der Schleuderscheibe (8) gebildet ist, der an seiner radial äußeren Seite eine ringförmige Öffnung (10) aufweist, **dadurch gekennzeichnet, dass** eine Leiteinrichtung (11) vorgesehen ist, die sich zumindest abschnittsweise über die Öffnung (10) erstreckt und derart ausgebildet ist, dass das von der Schleuderscheibe (8) weggelenkte Kühlschmiermittel über die Leiteinrichtung (11) in den Kühlschmiermittelraum (9) geleitet wird, wobei die Leiteinrichtung (11) von einer Gehäusewand (12) abragt und insbesondere an dieser befestigt ist.

2. Gehäuseanordnung nach Anspruch 1,
**dadurch gekennzeichnet, dass** die Leiteinrichtung (11) ringförmig ausgebildet ist.

3. Gehäuseanordnung nach Anspruch 2,
**dadurch gekennzeichnet, dass** die Leiteinrichtung (11) in deren Umfangsrichtung mit einem gleichbleibenden radialen Abstand zu der Welle (4) angeordnet ist.

4. Gehäuseanordnung nach Anspruch 2 oder 3,
**dadurch gekennzeichnet, dass** die Leiteinrichtung (11) in deren Umfangsrichtung mehrere die Leiteinrichtung (11) unterbrechende Öffnungsabschnitte (13) aufweist.

5. Gehäuseanordnung nach Anspruch 4,
**dadurch gekennzeichnet, dass** vier Öffnungsabschnitte (13) vorgesehen und insbesondere in Umfangsrichtung der Leiteinrichtung (11) mit einem Versatz von 90° angeordnet sind.

6. Gehäuseanordnung nach Anspruch 4 oder 5,
**dadurch gekennzeichnet, dass** sich die Öffnungsabschnitte (13) jeweils über einen Umfangsbereich von etwa 10° bis 80°, insbesondere 20° bis 45° erstrecken.

7. Gehäuseanordnung nach einem der vorherigen Ansprüche, **dadurch gekennzeichnet, dass** die Leiteinrichtung (11) als Vorsprung an dem Gehäuse (1) ausgebildet ist und insbesondere einteilig mit dem Gehäuse (1) ausgebildet ist.

8. Gehäuseanordnung nach einem der vorherigen Ansprüche, **dadurch gekennzeichnet, dass** die Dichtung (5) als Wellendichtring ausgebildet ist.

9. Gehäuseanordnung nach einem der vorherigen Ansprüche, **dadurch gekennzeichnet, dass** in dem Gehäuse (1) ein Motor, eine Adaptereinheit eines Getriebes oder eine Adaptereinheit eines Getriebemotors vorgesehen ist.

## Claims

1. Casing assembly with a casing (1), having a casing feedthrough (3), a shaft (4), which engages through the casing (3), a seal (5), which seals an annular gap (6) between the casing feedthrough (3) and the shaft (4), in order to prevent an escape of a cooling lubricant from the casing (1), and a centrifugal disc (8), which is disposed within the casing (1) and is connected to the shaft (4) in a torsion-proof manner, in order to divert a cooling lubricant striking it outwards from the shaft (4), wherein a cooling lubricant space (9) is formed between the seal (5) and the centrifugal disc (8), which has an annular opening (10) on its radially outer side, **characterised in that** a guide device (11) is provided, which extends at least in sections over the opening (10) and is embodied such that the cooling lubricant diverted away by the centrifugal disc (8) is conveyed via the guide device (11) into the coolant lubricant space (9), wherein the guide device (11) projects from a casing wall (12) and is especially fastened to said wall.

2. Casing assembly according to claim 1,
**characterised in that** the guide device (11) is embodied in a ring shape.

3. Casing assembly according to claim 2,
**characterised in that** the guide device (11) is disposed in its circumferential direction with a consistent radial distance to the shaft (4).

4. Casing assembly according to claim 2 or 3,
**characterised in that** the guide device (11), in its circumferential direction, has a number of opening sections (13) interrupting the guide device (11).

5. Casing assembly according to claim 4,
**characterised in that** four opening sections (13) are provided and are disposed especially in the circumferential direction of the guide device (11) with an offset of 90°.

6. Casing assembly according to claim 4 or 5,
**characterised in that** the opening sections (13) each extend over a circumferential area of around 10° to 80°, especially 20° to 45°.

7. Casing assembly according to one of the preceding claims, **characterised in that** the guide device (11) is embodied as a projection on the casing (1) and is especially embodied in one piece with the casing (1).

8. Casing assembly according to one of the preceding claims, **characterised in that** the seal (5) is embodied as a shaft seal.

9. Casing assembly according to one of the preceding claims, **characterised in that** a motor, an adapter unit of a transmission or an adapter unit of a transmission motor is provided in the casing (1).

## Revendications

1. Agencement de boîtier comprenant un boîtier ( 1 ) qui a une traversée ( 3 ) de boîtier, un arbre ( 4 ) qui passe dans la traversée ( 3 ) de boîtier, un joint ( 5 ) qui rend étanche un interstice ( 6 ) annulaire entre la traversée ( 3 ) de boîtier et l'arbre ( 4 ) pour empêcher un fluide de refroidissement et de lubrification de sortir du boîtier ( 1 ) et un disque ( 8 ) centrifuge, qui est disposé à l'intérieur du boîtier ( 1 ) et qui est solidaire en rotation de l'arbre ( 4 ), afin de dévier à l'extérieur de l'arbre ( 4 ) du fluide de refroidissement et de lubrification y arrivant, un espace ( 9 ) pour du fluide de refroidissement et de lubrification étant formé entre le joint ( 5 ) et le disque ( 8 ) centrifuge et ayant, sur son côté extérieur radialement, une ouverture ( 10 ) annulaire, **caractérisé en ce qu'**il est prévu un dispositif ( 11 ) de conduite, qui s'étend au moins par section sur l'ouverture ( 10 ) et qui est constitué de manière à ce que le fluide de refroidissement et de lubrification, dévié par le disque ( 8 ) centrifuge, soit conduit par le dispositif ( 11 ) de conduite dans l'espace ( 9 ) pour du fluide de refroidissement et de lubrification, le dispositif ( 11 ) de conduite dépassant d'une paroi ( 12 ) du boîtier et y étant notamment fixé.

2. Agencement de boîtier suivant la revendication 1, **caractérisé en ce que** le dispositif ( 11 ) de conduite est de forme annulaire.

3. Agencement de boîtier suivant la revendication 2, **caractérisé en ce que** le dispositif ( 11 ) de conduite est disposé dans sa direction périphérique en ayant une distance radiale restant la même par rapport à l'arbre ( 14 ).

4. Agencement de boîtier suivant la revendication 2 ou 3, **caractérisé en ce que** le dispositif ( 11 ) de conduite a, dans sa direction périphérique, plusieurs sections ( 13 ) d'ouverture interrompant le dispositif ( 11 ) de conduite.

5. Agencement de boîtier suivant la revendication 4, **caractérisé en ce qu'**il est prévu quatre sections ( 13 ) d'ouverture qui sont disposées, notamment dans la direction périphérique du dispositif ( 11 ) de conduite, à un décalage de 90°.

6. Agencement de boîtier suivant la revendication 4 ou 5, **caractérisé en ce que** les tronçons ( 13 ) d'ouverture s'étendent respectivement sur une partie de la périphérie d'environ 10° à 80°, notamment de 20° à 45°.

7. Agencement de boîtier suivant l'une des revendications précédentes,
**caractérisé en ce que** le dispositif ( 11 ) de conduite est constitué sous la forme d'une saillie sur le boîtier ( 1 ) et est notamment d'une seule pièce avec le boîtier ( 1 ).

8. Agencement de boîtier suivant l'une des revendications précédentes,
**caractérisé en ce que** le joint ( 5 ) est constitué sous la forme d'un joint d'étanchéité d'arbre.

9. Agencement de boîtier suivant l'une des revendications précédentes,
**caractérisé en ce qu'**il est prévu, dans le boîtier ( 1 ) , un moteur, une unité d'adaptation d'une transmission ou une unité d'adaptation d'un motoréducteur.
